# FASCICULE DE BREVET EUROPEEN

(11) **EP 2 539 503 B1**
(45) Date de publication et mention de la délivrance du brevet: **23.08.2017**
(21) Numéro de dépôt: 11712636.7
(22) Date de dépôt: 24.02.2011
(51) Int. Cl.: D06M 15/507, D21H 17/53, D21H 17/70, D21H 21/16, C08B 3/20, C08H 8/00

(54) **PROCÉDÉ DE PRÉPARATION DE BIOMATÉRIAUX HYDROPHOBISÉS, BIOMATÉRIAUX HYDROPHOBISÉS TELS QU'OBTENUS ET LEURS UTILISATIONS**
VERFAHREN ZUR HERSTELLUNG VON HYDROPHOBIERTEN BIOMATERIALIEN, AUF DIESE WEISE GEWONNENE HYDROPHOBIERTE BIOMATERIALIEN UND IHRE VERWENDUNG
METHOD FOR PREPARING HYDROPHOBIZED BIOMATERIALS, HYDROPHOBIZED BIOMATERIALS AS OBTAINED AND USES THEREOF

(30) Priorité: 24.02.2010 FR 1051308
(43) Date de publication de la demande: 02.01.2013
(73) Titulaire: Centre National de la Recherche Scientifique (C.N.R.S.), 75016 Paris (FR); Université Paris-Est Créteil Val de Marne, 94010 Creteil Cedex (FR)
(72) Inventeur: LANGLOIS, Valérie, F-94230 Cachan (FR); RENARD, Estelle, F-92340 Bourg-la-reine (FR); SAMAIN, Xavier, F-59800 Lille (FR)
(74) Mandataire: Lavoix
(86) Numéro de dépôt international: PCT/FR2011/050386
(87) Numéro de publication internationale: WO 2011/104482

(56) Documents cités:
- WO-A1-2010/074862
- US-A1- 2002 161 136
- LONNBERG HANNA ET AL: "Grafting of cellulose fibers with poly(epsilon -caprolactone) and poly(L-lactic acid) via ring-opening polymerization", BIOMACROMOLECULES, ACS, WASHINGTON, DC, US, vol. 7, no. 7, 13 juin 2006 (2006-06-13), pages 2178-2185, XP002422660, ISSN: 1525-7797, DOI: DOI:10.1021/BM060178Z

## Description

La présente invention a pour objet un procédé de préparation de biomatériaux hydrophobisés, notamment à base de cellulose, ainsi que les biomatériaux tels qu'obtenus et leurs utilisations.

La majorité de la communauté scientifique reconnaît le rôle de l'activité humaine sur le réchauffement climatique. Si l'apparition de ce phénomène paraît aujourd'hui inéluctable, il n'est pas trop tard pour en limiter l'ampleur. Le monde doit donc répondre au défi de la réduction des émissions des gaz à effet de serre. De plus, au delà de toute considération écologiste, la raréfaction des ressources fossiles constitue une menace pour la société entière. La volatilité sur le prix des matières premières peut en effet mettre en danger de nombreux secteurs économiques. La plasturgie est notamment en première ligne de par sa forte dépendance au pétrole. Plus que tout autre matériau, le prix du baril de pétrole se répercute directement sur celui des matières plastiques et il est indispensable de préparer aujourd'hui les solutions à la pénurie de pétrole bon marché qui ne manquera pas de se produire demain.

L'utilisation de polymère dans les véhicules automobiles a doublé au cours des 25 dernières années pour des raisons de facilité, de design, de légèreté, et de coûts. Ces plastiques ou résines sont fréquemment mis en oeuvre sous forme de composites pour améliorer leurs propriétés mécaniques. Un composite est fréquemment composé d'une matrice continue dans laquelle est dispersée une phase de renfort rigide, bien souvent sous forme de fibres. Les propriétés des composites dépendent tout d'abord de leurs constituants, de leurs natures chimiques et de leurs structures. Mais l'interface entre les fibres et la matrice joue aussi un rôle très important sur les propriétés mécaniques. L'interface doit permettre le transfert de contrainte de la matrice vers les fibres à travers une contrainte de cisaillement afin de conduire à un renfort efficace (V. Dutschk et al., Mechanics of Composite Materials. 1998, 34, 431). Quand le renfort est constitué par des fibres de verre, la difficulté pour séparer les fibres de la matrice pose de sérieux problèmes de recyclage et de valorisation des composites (R. Zah et al., Journal of Cleaner Production. 2006, 15, 1032).

Ces contraintes ont provoqué un intérêt croissant pour les matériaux composites d'origine renouvelable. La problématique de l'interface se pose également avec les biocomposites. La nature hydrophile des fibres d'origine naturelle est souvent une cause d'incompatibilité avec la nature hydrophobe des polymères. Un certain nombre d'études ont déjà été menées sur ce sujet, mais un grand effort de recherche est encore nécessaire pour améliorer les caractéristiques de surface des biocomposites (P.A. Fowler et al., J Sci Food Agric. 2006, 86, 1781).

La cellulose est le matériau de structuration des végétaux le plus abondant dans la nature. Il est bien connu que ce polymère peut être modifié chimiquement, incorporé dans des composites, utilisé en mélanges, ou être partie de copolymères. La préoccupation récente de l'environnement a conduit la recherche dans le domaine des fibres naturelles à modifier la cellulose pour accroître sa versatilité et étendre le spectre de ses applications. Deux sortes de modifications par greffage : le greffage, appelé "grafting-from" qui consiste à préparer des greffons par polymérisation d'un monomère par réaction avec une fonction latérale réactive, ou par greffage, "grafting-onto" et dans ce cas c'est un oligomère que l'on accroche au squelette macromoléculaire.

Les progrès incessants dans le domaine de la synthèse macromoléculaire ont permis de multiplier les matériaux obtenus par greffage et d'élargir les propriétés et donc les applications de la cellulose.

Toutefois, jusqu'à présent, les méthodes utilisées nécessitent des conditions expérimentales trop contraignantes et non attractives pour l'instant. En effet, par exemple, la polymérisation par ouverture de cycles de lactone requiert de travailler dans des conditions anhydres.

Un des buts de la présente invention consiste donc à fournir des matériaux composites préparés à partir de matières renouvelables.

Un autre but de la présente invention consiste donc à fournir un procédé simple et peu coûteux, facilement transposable au niveau industriel, pour la préparation de matériaux composites d'origine renouvelable.

La présente invention a pour but de fournir une méthode de traitement de matières renouvelables de façon à améliorer leur compatibilité avec des matrices polymères thermoplastiques, en modifiant certaines fonctions chimiques desdites matières renouvelables sans toutefois altérer leur structure.

La présente invention a également pour but de fournir des matériaux composites d'origine renouvelable présentant des hautes performances et pouvant être mis en oeuvre par les techniques usuelles de l'industrie, c'est-à-dire par procédé d'injection ou extrusion.

Ainsi, la présente invention concerne un procédé de préparation d'un biomatériau hydrophobisé constitué d'un matériau hydrophile présentant des fonctions hydroxyle, sur lequel sont greffées des chaînes de polymères présentant des fonctions ester, ledit procédé comprenant une étape de mise en contact dudit matériau hydrophile avec lesdits polymères et une réaction de transestérification entre lesdites fonctions ester et lesdites fonctions hydroxyle.

Le matériau hydrophile est avantageusement choisi parmi les fibres végétales, la silice, les dextranes ou les oligomères de cyclodextrine et leurs dérivés.

Ainsi, la présente invention concerne un procédé de préparation d'un biomatériau hydrophobisé constitué d'un matériau hydrophile, notamment choisi parmi les fibres végétales, présentant des fonctions hydroxyle, sur lequel sont greffées des chaînes de polymères présentant des fonctions ester, ledit procédé comprenant une étape de mise en contact dudit matériau hydrophile avec lesdits polymères et une réaction de transestérification entre lesdites fonctions ester et lesdites fonctions hydroxyle. Le biomatériau obtenu selon le procédé de l'invention peut également être nommé "biomatériau composite" ou "biocomposite".

Le terme "matériau composite" désigne un matériau en phase solide constitué d'au moins deux constituants dont les qualités respectives se complètent pour former un matériau aux performances globales améliorées. Un matériau composite structural est généralement constitué d'un renfort et d'une matrice. Le renfort, le plus souvent sous forme fibreuse ou filamentaire, assure l'essentiel des propriétés mécaniques. La matrice joue le rôle de liant afin de protéger le renfort de l'environnement, de le maintenir dans sa position initiale et d'assurer la transmission des efforts.

Un composite est défini comme le mélange de deux ou plusieurs phases qui conduit à des propriétés supérieures à celles des constituants pris individuellement. Un composite est fréquemment composé d'une matrice continue dans laquelle est dispersée une phase de renfort rigide, bien souvent sous forme de fibres. Le rôle de la matrice est de transférer les contraintes extérieures vers les fibres et de protéger le renfort. Les propriétés des composites dépendent tout d'abord de leurs constituants, de leurs natures chimiques et de leurs structures. Mais l'interface entre les fibres et la matrice joue aussi un rôle très important sur les propriétés mécaniques.

Le terme "biocomposite" ou "biomatériau composite" désigne un matériau qui contient au moins une phase issue de la biomasse, ou alors un matériau qui comprend des constituants tous issus de la biomasse.

Les biomatériaux hydrophobisés de l'invention sont préparés à partir d'un matériau hydrophile et le procédé de l'invention consiste à hydrophobiser ledit matériau, notamment choisi parmi les fibres végétales, présentant des fonctions hydroxyle (c'est-à-dire modifier chimiquement lesdites fonctions hydroxyle pour rendre ledit matériau, hydrophobe).

Les biomatériaux obtenus selon le procédé de l'invention sont des matériaux rendus hydrophobes par transestérification. On les nomme donc "biomatériaux hydrophobisés". Ils consistent en des matériaux hydrophiles, notamment choisis parmi les fibres végétales, rendus hydrophobes par transestérification entre les fonctions esters de polymères et les fonctions hydroxyles desdits matériaux.

Un composé est dit hydrophile quand il absorbe l'eau. Un composé hydrophile est typiquement polaire. Cela lui permet de créer des liaisons hydrogène avec l'eau ou un solvant polaire. Dans le cadre de la présente invention, les matériaux hydrophiles mis en oeuvre comprennent au moins un groupe fonctionnel hydroxyle (ou fonction alcool).

La nature hydrophile des fibres d'origine naturelle est souvent une cause d'incompatibilité avec la nature hydrophobe des polymères. Ainsi, le procédé de l'invention consiste à rendre hydrophobe ces fibres.

Les polymères présentant des fonctions ester utilisés dans le cadre de la présente invention peuvent être par exemple des polymères comprenant des fonctions ester ainsi que d'autres groupes fonctionnels ou des polyesters.

Généralement, le terme "fonction ester" désigne un groupement d'atomes du type -COOAlkyle.

Le procédé de la présente invention consiste en une transestérification entre les fonctions ester des polymères et les fonctions hydroxyle du matériau hydrophile, et notamment des fibres végétales.

Le biomatériau de l'invention est donc constitué d'un matériau hydrophile, notamment choisi parmi les fibres végétales dans lesquelles les fonctions hydroxyle ont été transestérifiées et donc sur lesquelles sont greffées (ou liées) de façon covalente des chaînes de polymères via des fonctions ester.

Le procédé de l'invention comprend une simple étape de mise en contact des deux constituants du biomatériau, à savoir une étape de mise en contact du matériau hydrophile, notamment choisi parmi des fibres végétales, et des polymères présentant des fonctions ester, suivie d'une étape de réaction de transestérification entre les fonctions alcool dudit matériau et les fonctions ester des polymères.

Le procédé de la présente invention consiste à hydrophobiser un matériau initialement hydrophile. On parlera alors, indifféremment, de matériau hydrophobisé ou de matériau greffé ou encore de matériau modifié. Le document US-A-2002/0161136 décrit un copolymère bio-compatible constitué d'un polymère hydrophobe et d'un polysaccharide comprenant des fonctions hydroxyles et soluble dans l'eau tel que le dextrane. L'acétate de magnésium est utilisé comme catalyseur de la réaction entre le dextrane et l'acide polylactique. Le procédé de la présente invention comprend avantageusement les étapes suivantes :
a) une étape de mise en contact du matériau hydrophile, notamment choisi parmi lesfibres végétales, présentant des fonctions hydroxyle avec des polymères présentant des fonctions ester ; et
b) une étape de transestérification entre les fonctions ester des polymères et les fonctions hydroxyle dudit matériau, ledit procédé étant effectué en l'absence de catalyseur. On récupère ainsi à l'issue de ce procédé un matériau hydrophobisé.

Selon un mode de réalisation particulièrement avantageux du procédé de l'invention, l'étape de transestérification est effectuée à une température comprise de 70 °C à 250 °C, de préférence de 100 °C à 200 °C, et préférentiellement de 140°C à 190°C.

Selon un mode de réalisation particulièrement préféré du procédé selon la présente invention, les fibres végétales présentant des fonctions hydroxyle sont choisies parmi : la cellulose et ses dérivés, les fibres de lin (notamment Durafiber, Grade One, pureté 95%), les fibres de chanvre, les fibres d'abaca, les fibres de jute, les fibres de kenaf, les fibres de lyocell (tencel), les fibres de pin, les fibres de rayonne (notamment Cordenka^{®}), les fibres de sisal, la pulpe de betterave, les fibres de viscose (notamment Enkaviscose^{®}) et les fibres d'ortie.

Parmi les dérivés de cellulose, on peut notamment citer les fibres de cellulose recyclée CreaMix TC 1004 et les fibres de cellulose défibrillée.

La cellulose est le matériau de structuration des végétaux le plus abondant dans la nature et son utilisation est multiple dans des domaines aussi divers que les textiles, le papier, les médicaments, la parapharmacie et tout ce qui touche au développement durable. Les macromolécules de cellulose associées forment des microfibrilles, qui elles-mêmes associées en couches, forment les parois des fibres végétales. Il s'établit des liaisons hydrogène entre les molécules de glucose des différentes chaînes.

De façon particulièrement préférée, la présente invention concerne un procédé de préparation de cellulose hydrophobisée (ou encore désignée cellulose greffée ou cellulose modifiée) comprenant une étape de mise en contact de la cellulose avec au moins un polymère présentant des fonctions ester et une étape de transestérification entre les fonctions ester dudit polymère (ou des polymères) et les fonctions hydroxyle de la cellulose.

Préférentiellement, la présente invention concerne un procédé de préparation de matériau hydrophile, notamment choisi parmi la silice, le dextrane ou un polymère de cyclodextrine, hydrophobisé comprenant une étape de mise en contact dudit matériau avec au moins un polymère présentant des fonctions ester et une étape de transestérification entre les fonctions ester dudit polymère (ou des polymères) et les fonctions hydroxyle dudit matériau. Le procédé de la présente invention peut également comprendre la mise en contact d'un matériau hydrophile tel que défini ci-dessus avec un ou plusieurs polymères présentant des fonctions ester. Ainsi, lorsque le procédé comprend l'utilisation de plusieurs polymères, ceux-ci peuvent être identiques ou de nature différente.

Parmi les polymères présentant des fonctions ester, on peut citer notamment les polyesters aliphatiques.

Le terme "polyester aliphatique" désigne un polyester dans lequel les fonctions ester sont reliées entre elles par des groupes aliphatiques.

Ainsi, selon un mode de réalisation particulier, les polyesters aliphatiques présentent la structure suivante : 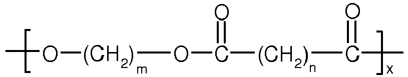 dans laquelle :
m est un nombre entier compris de 2 à 10, n est un nombre entier compris de 0 à 18, x est un nombre entier supérieur à 1.

Des exemples spécifiques de ces polyesters aliphatiques comprennent :
- les polymères aliphatiques à base succinate, tels que le polybutylène succinate, le polyéthylène succinate, le polypropylène succinate et leurs copolymères (notamment le polybutylène succinate adipate) ;
- les polymères aliphatiques à base oxalate, tels que le polyéthylène oxalate, le polybutylène oxalate, le polypropylène oxalate et leurs copolymères ;
- les polymères aliphatiques à base malonate, tels que le polyéthylène malonate, le polypropylène malonate, le polybutylène malonate et leurs copolymères ;
- les polymères aliphatiques à base adipate, tels que le polyéthylène adipate, le polypropylène adipate, le polybutylène adipate , le polyhexylène adipate et leurs copolymères ; ainsi que les mélanges de tous ces polymères ou copolymères.

Parmi les polymères pouvant être utilisés dans le cadre de la présente invention, on peut notamment citer le polybutylène succinate (PBS) de structure suivante :

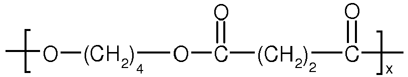

Parmi les polyesters aliphatiques, on peut également citer les polymères décrits dans les brevets US 5 714 569, US 5 883 199, US 6 521 366 et US 6 890 989.

De préférence, les polymères présentant des fonctions ester selon la présente invention sont choisis parmi les polymères biodégradables tels que le poly(acide glycolique)(PGA), le poly(acide lactique)(PLA), le poly(acide β-malique)(PMLA), la poly(ε-caprolactone)(PCL), le poly(p-dioxanone)(PDS), le polybutylène succinate (PBS) et le poly(3-hydroxybutyrate)(PHB).

Selon un mode de réalisation particulièrement avantageux, les polymères présentant des fonctions esters selon la présente invention sont choisis parmi les polyesters de la famille des poly(3-hydroxyalcanoates)(PHA), notamment le poly(3-hydroxybutyrate)(PHB), le poly(3-hydroxybutyrate-co-3-hydroxyvalérate)(PHBHV), le poly(3-hydroxybutyrate-co-hydroxyhexanoate) (PHBHHx), le poly(3-hydroxy-octanoate)(PHO) et le poly(acide lactique)(PLA).

Parmi les polyesters issus de ressources renouvelables, le PLA peut être obtenu auprès des fournisseurs suivants : NatureWorks (Cargill - USA), Eco Plastic (Toyota - Japon), Lacty (Shimadzu - Japon), Treofan (Treofan - Pays-Bas), Lacea (Mitsui Chemicals - Japon), CPLA (Dainippon Ink Chem. - Japon), PLA (Purac - Pays Bas), Ecoloju (Mitsubishi - Japon) et Biomer L (Biomer - Allemagne).

Le PHA peut être obtenu auprès des fournisseurs suivants : Biocycle (PHB Industrial - Brésil), Metabolix (Metabolix/ADM - USA), Enmat (Tianan - Chine), Biomer P (Biomer - Allemagne) et Nodax (Procter & Gamble).

Parmi les polyesters issus de ressources fossiles, la PCL peut être obtenue auprès des fournisseurs suivants : CAPA (Solvay - Belgique) et TONE (Union Carbide-USA).

Les copolyesters peuvent être obtenus auprès des fournisseurs suivants : Bionolle (Showa - Japon), Ecoflex (BASF - Allemagne), Biomax (Dupont - USA), EnPol (Ire Chemical - Corée du Sud), Lunare SE (Nippon Shokubai - Japon), Celgreen (Daicel - Japon) et Origo-Bi (Novamont-Italie).

Selon un mode de réalisation préférentiel, l'étape de transestérification est réalisée sous irradiations micro-onde.

Selon un mode de réalisation particulier, l'étape de mise en contact du procédé de l'invention entre le matériau hydrophile et les polymères présentant des fonctions ester est une étape consistant à chauffer ledit matériau hydrophile et les polymères présentant des fonctions ester en l'absence de solvant et, de préférence, en l'absence de catalyseur.

Ce mode de réalisation du procédé consiste en une imprégnation à l'état fondu et consiste notamment à chauffer et presser une couche dudit matériau hydrophile entre deux couches de polymères présentant des fonctions ester.

De façon particulièrement préférée, l'étape de mise en contact du matériau hydrophile avec les polymères présentant des fonctions ester est une étape consistant à immerger ledit matériau hydrophile dans une solution comprenant un solvant approprié dans lequel les polymères présentant des fonctions ester ont été solubilisés.

Ce mode de réalisation préférentiel consiste donc à immerger (trempage) le matériau hydrophile que l'on souhaite rendre hydrophobe dans une solution constituée d'un solvant et du ou des polymères, notamment polyesters aliphatiques.

Cette étape d'immersion est suivie par une étape de chauffage qui entraîne la transestérification entre les fonctions ester dudit polymère (ou des polymères) et les fonctions hydroxyle du matériau hydrophile.

Cette étape d'immersion est généralement suivie d'une étape de séchage du matériau modifié (hydrophobisé), avant transestérification, de préférence à température ambiante, afin d'éliminer le solvant résiduel.

De préférence, la durée de ladite étape d'immersion est comprise de 10 minutes à 120 minutes, et est de préférence égale à 15 minutes.

Le procédé de la présente invention peut comprendre plusieurs cycles d'immersion et plusieurs cycles de chauffage. Le matériau hydrophile peut donc être trempé dans une solution comprenant le solvant et le (ou les) polymère(s) à plusieurs reprises.

De préférence, on effectue un seul cycle d'immersion, c'est-à-dire que le matériau hydrophile est trempé une seule fois dans la solution susmentionnée.

Dans le cadre de cette étape d'immersion, la concentration en polymères présentant des fonctions ester dans la solution susmentionnée (c'est-à-dire comprenant les polymères solubilisés dans un solvant) est comprise de 10 g.L⁻¹ à 100 g.L⁻¹, de préférence de 10 g.L⁻¹ à 50 g.L⁻¹, et préférentiellement égale à 50 g.L⁻¹.

De préférence, lorsque le polymère est le PHB, cette concentration est égale à 50 g.L⁻¹.

Parmi les solvants pouvant être utilisés pour cette étape d'immersion, à savoir les solvants dans lesquels les polymères présentant des fonctions ester tels que définis ci-dessus sont solubles, on peut citer de préférence les solvants choisis dans le groupe constitué du dichlorométhane, du chloroforme, du tétrahydrofurane, et de leurs mélanges.

Préférentiellement, lorsque le polymère est le PHB ou le PHBHV, on utilise comme solvant le dichlorométhane ou le chloroforme.

Préférentiellement, lorsque le polymère est le PHO ou le PLA, on utilise comme solvant le dichlorométhane, le chloroforme ou le tétrahydrofurane. Le procédé de la présente invention est effectué en l'absence de catalyseur.

On rappelle ici qu'un catalyseur est une substance qui augmente ou diminue la vitesse d'une réaction chimique ; il participe à la réaction mais est régénéré à la fin de la réaction. Il ne fait donc pas partie des réactifs ni des produits obtenus.

Un mode de réalisation préféré de la présente invention consiste en un procédé d'hydrophobisation de la cellulose, comprenant les étapes suivantes :
- une étape d'immersion de la cellulose dans une solution comprenant un solvant approprié dans lequel un ou plusieurs polymères présentant des fonctions ester ont été solubilisés, et plus particulièrement dans une solution comprenant un solvant et un ou plusieurs polymères choisis parmi PHA, PLA, PHB, PHBHV, PCL et PHO, et
- une étape de transestérification entre les fonctions ester dudit polymère (ou des polymères) et les fonctions hydroxyle de la cellulose, à une température comprise de 70 °C à 250 °C, de préférence de 170 °C à 190 °C.

On récupère ainsi à l'issue de ce procédé de la cellulose hydrophobisée.

Le procédé de la présente invention consiste donc notamment à hydrophobiser des mats de cellulose par réaction entre un polyester aliphatique et les groupes hydroxyle de la cellulose (estérification des fonctions hydroxyle de la cellulose et transestérification du polyester). La réaction ne nécessite aucun traitement préalable de la cellulose.

Cette réaction est réalisée avec le polymère natif de masse molaire élevée sans qu'il soit nécessaire de le fonctionnaliser au préalable. Cette réaction est notamment réalisée à l'état solide à chaud par simple mise en contact des deux partenaires sans ajout de catalyseur. L'optimisation des conditions expérimentales permettent d'hydrophobiser la cellulose quelle que soit la nature du polyester utilisé. L'hydrophobisation de la cellulose permet d'envisager la préparation de biocomposites entièrement biosourcés par un processus extrêmement simple et facilement transposable à plus grande échelle.

La présente invention concerne également un biomatériau hydrophobisé susceptible d'être obtenu selon le procédé tel que défini ci-dessus, caractérisé en ce qu'il est constitué d'un matériau hydrophile, notamment choisi parmi les fibres végétales, présentant des fonctions hydroxyle sur lesquelles sont greffées des chaînes de polymères présentant des fonctions ester.

La présente invention concerne également un biomatériau hydrophobisé susceptible d'être obtenu selon le procédé tel que défini ci-dessus, caractérisé en ce qu'il est constitué de fibres végétales présentant des fonctions hydroxyle sur lesquelles sont greffées des chaînes de polymères présentant des fonctions ester.

En particulier, le biomatériau hydrophobisé selon la présente invention, et plus particulièrement la cellulose hydrophobisée, présente un angle de contact avec l'eau d'au moins 115°, préférentiellement d'au moins 120°, et notamment d'au moins 130°.

La mesure de l'angle de contact est une technique qui rend compte de l'aptitude d'un liquide à s'étaler sur une surface par mouillabilité. La méthode consiste à mesurer l'angle de la tangente du profil d'une goutte déposée sur le substrat, avec la surface du substrat. Elle permet de mesurer l'énergie de surface du liquide ou du solide.

La mesure de l'angle de contact permet la discrimination de la nature polaire ou apolaire des interactions à l'interface liquide-solide. On peut ainsi déduire le caractère hydrophile ou hydrophobe d'une surface.

La mesure de cet angle de contact en présence d'eau permet de déduire le caractère hydrophobe de la surface (biomatériau hydrophobisé de l'invention), au vu de la valeur élevée de cet angle.

La présente invention concerne également l'utilisation d'un biomatériau hydrophobisé tel que défini ci-dessus, pour la préparation de matériaux composites.

La présente invention concerne donc également un matériau composite comprenant un biomatériau hydrophobisé tel que défini ci-dessus et un polymère.

Dans ces matériaux composites comprenant au moins une couche constituée du biomatériau de l'invention hydrophobisé, et de préférence comprenant au moins une couche constituée de cellulose hydrophobisée, le polymère peut être de identique ou différent du ou des polymères comprenant les fonctions ester greffées sur ledit biomatériau hydrophobisé.

Par exemple, le fait de traiter les fibres de cellulose, permet d'améliorer leur compatibilité avec une matrice polymère thermoplastique.

La présente invention concerne également un matériau composite de type "sandwich" comprenant une couche constituée d'un biomatériau hydrophobisé tel que défini ci-dessus et de deux couches de polymère, lesdites couches de polymère étant respectivement au-dessus et au-dessous de la couche de biomatériau hydrophobisé.

Le polymère de ces matériaux composites est choisi parmi les matrices polymères thermoplastiques et peut être de même nature ou de nature différente des polymères utilisés pour greffer les fonctions ester sur le matériau à hydrophobiser.

Selon un mode de réalisation préféré, la présente invention concerne un matériau composite de type "sandwich" comprenant une couche constituée de cellulose hydrophobisée telle que définie ci-dessus et de deux couches de polymères, notamment de PLA ou de PHAs.

### FIGURES

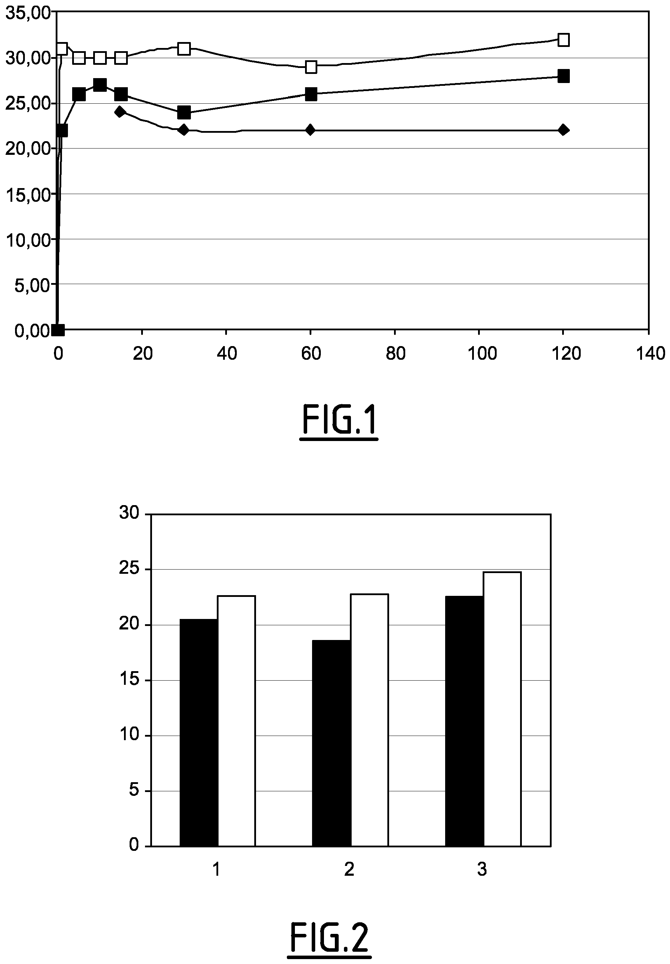

La Figure 1 représente la quantité de polyester adsorbée sur la cellulose en fonction du temps d'immersion à une concentration de 50 g/L. L'axe des abscisses représente le temps d'immersion (en minutes) et l'axe des ordonnées la quantité de polymère greffée Δm / m₀ (%). La courbe avec les carrés correspond au PHBHV, la courbe avec les losanges correspond au PHO et la courbe avec les carrés blancs correspond au PLA.
La Figure 2 représente l'influence du nombre de cycles d'immersion de la cellulose sur la quantité de polyester adsorbée. L'axe des abscisses indique le nombre de cycles d'immersion (1, 2 ou 3) et l'axe des ordonnées la masse de polymère greffée (en mg). Les barres noires correspondent au PHO et les barres blanches au PHBHV.

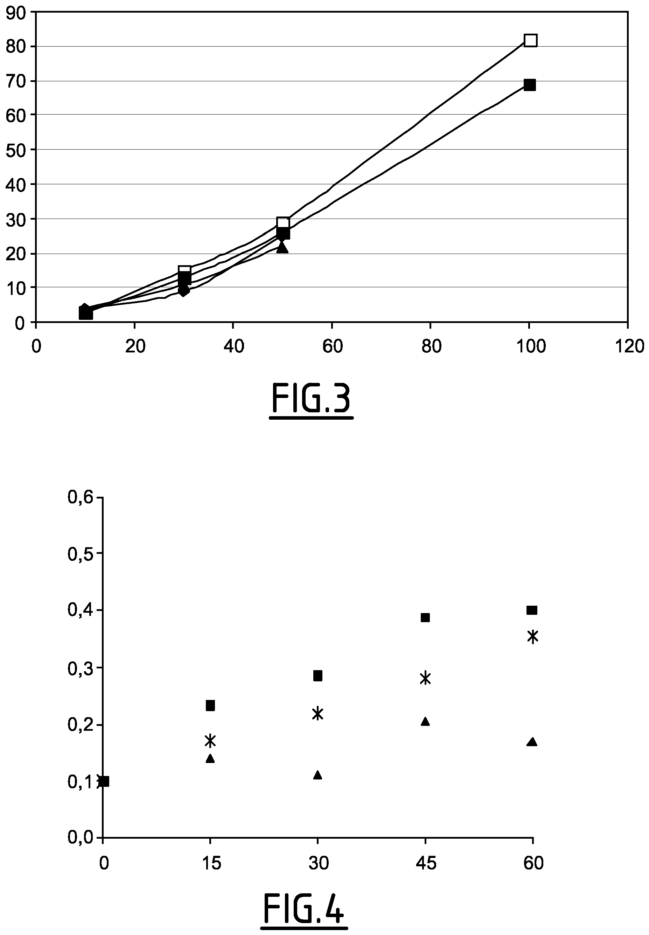

La Figure 3 représente l'influence de la concentration du polyester sur la quantité de polymère adsorbée. L'axe des abscisses représente la concentration des polyesters (en g/L) et l'axe des ordonnées la quantité de polymère greffée Δm / m₀ (%). La courbe avec les carrés correspond au PHBHV ; la courbe avec les losanges correspond au PHO ; la courbe avec les triangles correspond au PHB et la courbe avec les carrés blancs au PLA.

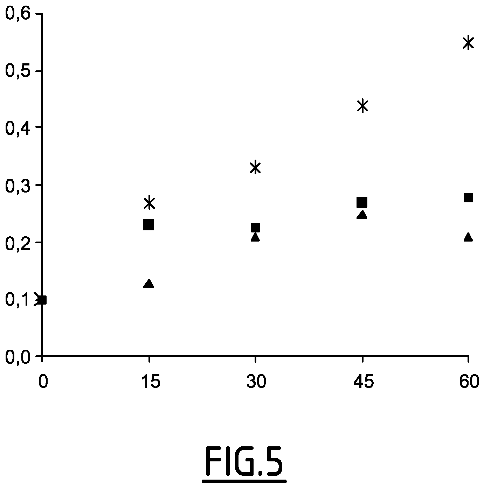

Les Figures 4 et 5 représentent les rapports d'absorbance de la cellulose après transestérification par le PHO, le PLA et le PHB à 170°C (Figure 4) et à 190°C (Figure 5). L'axe des abscisses représente la durée (en minutes) et l'axe des ordonnées le rapport entre l'absorption due à la vibration d'élongation de la fonction ester à 1745 cm⁻¹ et l'absorbance de la liaison OH de l'eau liée à la cellulose à 1645 cm⁻¹. La courbe avec les carrés correspond au PHO ; la courbe avec les croix correspond au PLA et la courbe avec les triangles correspond au PHB.

### EXEMPLES

### Produits utilisés

A titre de fibre végétale, on a utilisé de la cellulose fournie par la société Alstrom. Le papier utilisé est un mélange de fibres de bois contenant 71 % de résineux et 29% de feuillu. Il est réalisé sur une machine à papier en continu. Son grammage est de 90 g/m² et son épaisseur est de 0,32 mm.

Les polymères utilisés sont : Le polyacide lactique PLA (Cargill), le PHB (Biomer), la polycaprolactone (Aldrich) et le poly(3-hydroxybutyrate-co-3-hydroxyvalerate) (ICI), le PHBHV (produit par Biomer), le PHBHV (produit par Goodfellow), le poly(3-hydroxyoctanoate) dont les caractéristiques sont données dans le tableau 1 ci-après :
La silice utilisée est la silice AEROSIL 150, le dextrane utilisé est le dextrane T10 Pharmacia Biotech et enfin le polymère de cyclodextrine a été préparé selon le mode opératoire décrit dans E. Renard, A. Deratani, G. Volet, B. Sebille, Eur. Polym. J., 33,1,49-57(1997).

**Tableau 1 : caractérisation des polyesters**

| Polymères | T_{g}(°C) | Tₘ(°C) |
|---|---|---|
| PHB | 8 | 176 |
| PHBHV | 8 | 158 |
| PHO | -40 | 55 |
| PLA | 60 | |
| PCL | -60 | 60 |

### A. Biocomposites préparés à partir de cellulose

### Mode opératoire - Préparation des biocomposites

Les polymères ont été préalablement mis en solution dans le dichlorométhane.

La cellulose a été immergée dans la solution à température ambiante. L'influence de la concentration en polyester (1 à 50g/L), la durée d'imprégnation (15 à 120 minutes) et le nombre d'imprégnations (1 à 3) a été étudiée de manière systématique. L'étape d'imprégnation de la cellulose a été réalisée sous agitation à l'aide d'un barreau aimanté. La feuille de cellulose a ensuite été retirée de la solution et placée dans une étuve.

La quantité de polymère greffé est calculée de la façon suivante :
Δm = mₜ - m₀ où m₀ est la masse initiale de la cellulose et mₜ la masse de la cellulose après imprégnation.

Les traitements thermiques ont été réalisés à 140°C, 170°C et 190°C pendant 5/15/30/45/60 et 90 minutes.

Après le traitement thermique, le polymère non greffé a été extrait 3 fois par du dichlorométhane à reflux.

Enfin, l'hydrophobisation de la cellulose a été testée à l'aide de la mesure de l'angle de contact d'une goutte d'eau ainsi que par analyse Infra Rouge par mode ATR.

### Imprégnation

La cellulose (mat de cellulose de 3 x 3 cm) a été immergée dans une solution de polymère (PHO, PHBHV et PHB) à 50 g/L dans du dichlorométhane pendant une durée de 15 à 120 min. La cellulose a ensuite été séchée à température ambiante pour permettre l'évaporation du dichlorométhane. La masse de la cellulose déterminée par gravimétrie est reportée sur la figure 1. Les résultats montrent qu'on obtient des résultats satisfaisants à partir d'une durée d'immersion de 15 minutes, quelle que soit la nature du polymère, pour adsorber entre 17 et 25 mg de polymère.

Le nombre de cycles d'immersion a été testé (de 1 immersion à 3 immersions d'une durée d'une heure). Les résultats sont présentés sur la figure 2. On constate que de fortes quantités de polyesters sont greffées quel que soit le nombre de cycles d'immersion.

L'influence de la concentration en PHA a également été étudiée (Figure 3). Il est donc possible de moduler la quantité de polyester adsorbée sur la cellulose en fonction de la concentration de la solution.

### Greffage

Les trois procédés de greffage suivants ont été testés :

### 1) Réaction dans une étuve thermostatée

Après l'adsorption des polyesters sur la cellulose, les échantillons ont été placés dans une étuve thermostatée à différentes températures (140°C, 170°C et 190°C). La réaction s'est effectuée en masse sans catalyseur pendant des durées allant de 15 à 90 minutes. Après réaction, le polyester non greffé a été extrait par 3 extractions successives dans du dichlorométhane au reflux (3 x 40 mL) pendant 30 minutes.

### 2) Réaction sous irradiations micro-onde

Après l'adsorption des polyesters sur la cellulose, les échantillons ont été placés dans un appareil micro ondes (micro wave synthesis reactor monowave Anton Paar) à température constante, à 90°C de 3 à 15 minutes.

### 3) Réaction sous presse chauffante

Des films de polyesters ont été préparés par évaporation de solvant ou alors par chauffage/pression entre les plateaux chauffants d'une presse chauffante. La durée et la pression appliquées varient avec la nature du polymère. Pour réaliser la réaction, un mat de cellulose a été placé entre deux films de polyesters, puis l'ensemble a été chauffé entre les plateaux d'une presse chauffante (sans appliquer de pression supplémentaire autre que les poids des 2 plateaux chauffants). La réaction a été réalisée à 170°C pendant un temps compris entre 15 et 45 minutes.

Le procédé sous presse chauffante permet ainsi de s'affranchir de l'étape d'imprégnation en solution.

### Mise en évidence du greffage par FTIR

La présence de polyester sur la cellulose peut être mise en évidence par spectroscopie FTIR. La cellulose native présente une large bande à 3380 cm⁻¹ due à l'élongation de la liaison OH. La liaison OH de l'eau liée à la cellulose absorbe à 1645 cm⁻¹.

A 1058 cm⁻¹, on a observé un pic intense relatif à l'élongation des liaisons C-O du squelette cellulosique. Après le greffage, un pic apparaît à 1745 cm⁻¹, correspondant à la vibration d'élongation du carbonyle de la fonction ester. A 1235 cm⁻¹, on observe l'apparition d'un pic peu intense relatif à la vibration d'élongation de la liaison C-O des esters.

Il est également possible d'évaluer la teneur en polyester en effectuant le rapport entre l'absorbance due à la fonction ester et celle d'une fonction chimique liée à la cellulose. Par la suite, on a donc calculé le rapport entre l'absorption due à la vibration d'élongation de la fonction ester à 1745 cm⁻¹ et l'absorbance de la liaison OH de l'eau liée à la cellulose à 1645 cm⁻¹ dans le but de comparer les échantillons de cellulose greffée. Ce rapport est noté A.

Le rapport A défini par FTIR atteste bien de la présence des polyesters à la surface de la cellulose greffée par le PHO et le PLA (Figures 4 et 5). En effet, le rapport A est supérieur à 0,15 et il augmente linéairement avec le temps réactionnel. Cette augmentation s'accentue avec la température. Par contre pour le PHB, le rapport de bande est toujours inférieur à ceux obtenus pour le PHO et le PLA.

### Exemple 1 : Procédé avec imprégnation et réaction de transestérification dans une étuve thermostatée

Les résultats du tableau 2 ci-dessous montrent que les réactions de greffage par transestérification de PHO et de PLA permettent de rendre la surface hydrophobe. Ces réactions sont extrêmement rapides car elles peuvent être réalisées en 15 minutes à 170°C.

**Tableau 2 : angles de contact sur la cellulose après transestérification avec le PHO et le PLA**

| Polyester | Température (°C) | Durée (min) | Angle de contact (°) |
|---|---|---|---|
| PHO | 170 | 0 | 0 |
| | | 15 | 132 ± 4 |
| | | 30 | 135 ± 2 |
| | | 45 | 131 ± 4 |
| | | 60 | 131 ± 5 |
| | 190 | 0 | 0 |
| | | 15 | 135 ± 3 |
| | | 30 | 129 ± 2 |
| | | 45 | 134 ± 5 |
| | | 60 | 134 ± 2 |
| PLA | 170 | 0 | 0 |
| | | 15 | 129 ± 4 |
| | | 30 | 130 ± 2 |
| | | 45 | 134 ± 2 |
| | | 60 | 133 ± 3 |
| | 190 | 0 | 0 |
| | | 15 | 130 ± 4 |
| | | 30 | 130 ± 2 |
| | | 45 | 134 ± 2 |
| | | 60 | 133 ± 3 |

Les résultats montrent que la cellulose devient hydrophobe après ce traitement ce qui atteste de la présence d'oligomères de polyesters aliphatiques à la surface des feuilles de papier.

Les résultats supplémentaires du tableau 3 montrent que les réactions de greffage par transestérification de PHBHV et PCL, à une température de 170°C , ainsi que de PLA, à 140°C, permettent de rendre la surface hydrophobe.

**Tableau 3 : angles de contact sur la cellulose après transestérification avec le PLA, PHBHV et le PCL**

| Polyester | Température (°C) | Durée (min) | Angle de contact (°) |
|---|---|---|---|
| PHBHV^{a)} (Mn = 88 000 g/mol) | 170 | 45 | 129 |
| PLA (Mn = 80 000 g/mol) | 140 | 45 | 126 |
| PCL (Mn = 4 000 g/mol) | 170 | 60 | 129 |

| | | | |
|---|---|---|---|
| ^{a)} 2 cycles (imprégnation/réaction dans étuve) réalisés. | | | |

### Exemple 2 : Procédé avec imprégnation et réaction de transestérification sous irradiations micro-ondes

Les résultats du tableau 4 ci-dessous montrent que les réactions de greffage par transestérification de PHBHV, de PLA et de PCL permettent de rendre la surface hydrophobe. L'utilisation des micro-ondes permet de réduire significativement la durée des réactions. En effet, ces réactions de greffage sont extrêmement rapides car elles peuvent être réalisées en seulement 5 minutes à des températures de 90°C et 100°C.

**Tableau 4 : angles de contact sur la cellulose après transestérification avec le PHBHV, le PLA et le PCL**

| Polyester | Température (°C) | Durée (min) | Angle de contact (°) |
|---|---|---|---|
| PHBHV (Mn = 88 000 g/mol) | 90 | 5 | 117 |
| PLA (Mn = 80 000 g/mol) | 90 | 5 | 126 |
| PCL (Mn = 4 000 g/mol) | 100 | 5 | 125 |

Les résultats montrent que la cellulose devient hydrophobe après ce traitement ce qui atteste de la présence d'oligomères de polyesters aliphatiques à la surface des feuilles de papier.

### Exemple 3 : Procédé avec réaction de transestérification sous presse chauffante sans imprégnation en solution préalable

Les résultats du tableau 5 ci-dessous montrent que les réactions de greffage par transestérification de PLA et de PCL, sous presse chauffante, permettent de rendre la surface hydrophobe. Ces réactions de greffage sont réalisées sans étape d'imprégnation en solution préalable de la cellulose.

**Tableau 5 : angles de contact sur la cellulose après transestérification avec le PHO et le PLA**

| Polyester | Température (°C) | Durée (min) | Angle de contact (°) |
|---|---|---|---|
| PHO (Mn = 80 000 g/mol) | 170 | 30 | 129 |
| PLA (Mn = 80 000 g/mol) | 170 | 30 | 133 |

Les résultats montrent que la cellulose devient hydrophobe après ce traitement ce qui atteste de la présence d'oligomères de polyesters aliphatiques à la surface des feuilles de papier.

### B. Biocomposites préparés à partir d'autres biomatériaux

Le mode opératoire de préparation (imprégnation/greffage) des biocomposites à partir de silice, dextrane et de polymères de cyclodextrines est identique à celui décrit précédemment avec la cellulose.

L'étape d'imprégnation est réalisée par mélange de poudre de silice (de dextrane ou de polymère de cyclodextrines) et de PLA en présence d'un minimum de solvant.

Les résultats du tableau 6 ci-dessous montrent que les réactions de greffage par transestérification de PLA permettent de rendre la surface hydrophobe des biomatériaux tels que la silice native, le dextrane et les polymères de cyclodextrine.

**Tableau 6 : angles de contact sur différents matériaux après transestérification avec le PLA**

| Polymère | Autre matériau | Température (°C) | Durée (min) | γ(°) |
|---|---|---|---|---|
| PLA | silice | 170 | 45 | 82 |
| | dextrane | 170 | 45 | 66 |
| | Polymère de cyclodextrine | 170 | 45 | 92 |

Les résultats montrent que les biomatériaux testés deviennent hydrophobes après ce traitement ce qui atteste de la présence d'oligomères de polyesters aliphatiques à la surface des matériaux testés.

## Revendications

1. Procédé de préparation d'un biomatériau hydrophobisé constitué d'un matériau hydrophile présentant des fonctions hydroxyle, sur lequel sont greffées des chaînes de polymères présentant des fonctions ester, ledit procédé comprenant une étape de mise en contact dudit matériau hydrophile avec lesdits polymères et une réaction de transestérification entre lesdites fonctions ester et lesdites fonctions hydroxyle, ledit procédé étant effectué en l'absence de catalyseur.

2. Procédé selon la revendication 1, **caractérisé en ce que** le matériau hydrophile est choisi parmi les fibres végétales, la silice, les dextranes ou les oligomères de cyclodextrine et leurs dérivés.

3. Procédé selon la revendication 1 ou 2, **caractérisé en ce que** l'étape de transestérification est effectuée à une température comprise de 70°C à 250°C, de préférence de 100 °C à 200 °C, et préférentiellement de 140 °C à 190 °C.

4. Procédé selon l'une quelconque des revendications 1 à 3, dans lequel le matériau hydrophile est choisi parmi les fibres végétales.

5. Procédé selon la revendication 4, dans lequel les fibres végétales sont choisies parmi : la cellulose et ses dérivés, les fibres de lin, les fibres de chanvre, les fibres d'abaca, les fibres de jute, les fibres de kenaf, les fibres de lyocell, les fibres de pin, les fibres de rayonne, les fibres de sisal, la pulpe de betterave, les fibres de viscose et les fibres d'ortie.

6. Procédé selon l'une quelconque des revendications 1 à 5, dans lequel les polymères présentant des fonctions ester sont choisis parmi les polyesters aliphatiques.

7. Procédé selon l'une quelconque des revendications 1 à 6, dans lequel l'étape de mise en contact du matériau hydrophile avec les polymères présentant des fonctions ester est une étape consistant à immerger ledit matériau hydrophile dans une solution comprenant un solvant approprié dans lequel les polymères présentant des fonctions ester ont été solubilisés.

8. Procédé selon la revendication 7, **caractérisé en ce que** la concentration en polymères présentant des fonctions ester dans la solution est comprise de 10 g.L⁻¹ à 100 g.L⁻¹, de préférence de 10 g.L⁻¹ à 50 geL⁻¹ et préférentiellement égale à 50 g.L⁻¹_{.}

9. Procédé selon l'une quelconque des revendications 7 ou 8, dans lequel le solvant est choisi dans le groupe constitué du dichlorométhane, du chloroforme, et du tétrahydrofurane.

10. Procédé selon la revendication 7, dans lequel la durée de l'étape d'immersion est comprise de 10 minutes à 120 minutes.

## Patentansprüche

1. Verfahren zur Herstellung eines hydrophoben Biomaterials bestehend aus einem hydrophilen Material mit Hydroxyl-Funktionen, worauf Polymerketten mit Ester-Funktionen aufgepfropft sind, wobei das Verfahren einen Schritt des in Kontakt Bringens des hydrophilen Materials mit den Polymeren und eine Umesterungs-Reaktion zwischen den Ester-Funktionen und den Hydroxyl-Funktionen umfasst, wobei das Verfahren in Abwesenheit eines Katalysators effektiv ist.

2. Verfahren gemäß Anspruch 1, **dadurch gekennzeichnet dass** das hydrophile Material aus pflanzlichen Fasern, Kieselsäure, Dextranen oder Cyclodextrin-Oligomeren oder deren Derivaten ausgewählt ist.

3. Verfahren gemäß Anspruch 1 oder 2, **dadurch gekennzeichnet, dass** der Umesterungs-Schritt bei einer Temperatur von 70 °C bis 250 °C, vorzugsweise von 100 °C bis 200 °C, und bevorzugt von 140 °C bis 190 °C effektiv ist.

4. Verfahren gemäß einem der Ansprüche 1 bis 3, wobei das hydrophile Material aus pflanzlichen Fasern ausgewählt ist.

5. Verfahren gemäß Anspruch 4, wobei die pflanzlichen Fasern ausgewählt sind aus: Zellulose und deren Derivaten, Flachsfasern, Hanffasern, Abacafasern, Jutefasern, Kenaffasern, Lyocellfasern, Kieferfasern, Kunstseidefasern, Sisalfasern, Rübenpulpe, Viskosefasern und Nesselfasern.

6. Verfahren gemäß einem der Ansprüche 1 bis 5, wobei die Polymere mit Ester-Funktionen aus aliphatischen Polyestern ausgewählt sind.

7. Verfahren gemäß einem der Ansprüche 1 bis 6, wobei der Schritt des in Kontakt Bringens des hydrophilen Materials mit den Polymeren mit Ester-Funktionen ein Schritt ist bestehend aus dem Eintauchen des hydrophilen Materials in eine Lösung umfassend ein geeignetes Lösungsmittel in welchem die Polymere mit den Esterfunktionen gelöst sind.

8. Verfahren gemäß Anspruch 7, **dadurch gekennzeichnet, dass** die Konzentration an Polymeren mit den Ester-Funktionen in der Lösung von 10 g.L⁻¹ bis 100 g.L⁻¹, vorzugsweise von 10 g.L⁻¹ bis 50 g.L⁻¹, und bevorzugt 50 g.L⁻¹ entspricht.

9. Verfahren gemäß einem der Ansprüche 7 oder 8, wobei das Lösungsmittel aus der Gruppe bestehend aus Dichlormethan, Chloroform und Tetrahydrofuran ausgewählt ist.

10. Verfahren gemäß Anspruch 7, wobei der Zeitraum des Eintauch-Schritts 10 bis 120 Minuten umfasst.

## Claims

1. A method for preparing a hydrophobized biomaterial consisting of a hydrophilic material having hydroxyl functions, onto which are grafted chains of polymers having ester functions, said method comprising a step for putting said hydrophilic material in contact with said polymers and for a transesterification reaction between said ester functions and said hydroxyl functions, said method being carried out in the absence of a catalyst.

2. The method according to claim 1, **characterized in that** the hydrophilic material is selected from vegetable fibers, silica, dextran or oligomers of cyclodextrin and derivatives thereof.

3. The method according to claim 1 or 2, **characterized in that** the transesterification step is carried out at a temperature comprised from 70°C to 250°C, preferably from 100°C to 200°C, and preferentially from 140°C to 190°C.

4. The method according to any one of claims 1 to 3, wherein the hydrophilic material is selected from vegetable fibers.

5. The method according to claim 4, wherein the vegetable fibers are selected from: cellulose and derivatives thereof, flax fibers, hemp fibers, abaca fibers, jute fibers, kenaf fibers, lyocell fibers, pine fibers, rayon fibers, sisal fibers, beetroot pulp, viscose fibers and nettle fibers.

6. The method according to any of claims 1 to 5, wherein the polymers having ester functions are selected from aliphatic polyesters.

7. The method according to any of claims 1 to 6, wherein the step for putting the hydrophilic material in contact with the polymers having ester functions is a step consisting of immersing said hydrophilic material in a solution comprising a suitable solvent in which the polymers having ester functions have been solubilized,.

8. The method according to claim 7, **characterized in that** the concentration of polymers having ester functions in the solution is comprised from 10 g.L⁻¹ to 100 g.L⁻¹, preferably from 10 g.L⁻¹ to 50 g.L⁻¹, and preferentially equal to 50 g.L⁻¹.

9. The method according to any of claims 7 or 8, wherein the solvent is selected from the group consisting of dichloromethane, chloroform and tetrahydrofurane.

10. The method according to claim 7, wherein the duration of the immersion step preferably being comprised between 10 minutes to 120 minutes.
